# FASCICULE DE BREVET EUROPEEN

(11) **EP 2 302 926 B1**
(45) Date de publication et mention de la délivrance du brevet: **05.11.2014**
(21) Numéro de dépôt: 10306031.5
(22) Date de dépôt: 24.09.2010
(51) Int. Cl.: H04N 21/234, H04N 21/44, H04N 21/658, H04N 21/81, H04N 21/845

(54) **Technique de supervision d'une qualité d'une insertion d'un deuxième contenu lors d'une diffusion d'un premier contenu**
Technik zur Qualitätsüberwachung beim Hinzufügen eines zweiten Inhalts bei einer Übertragung eines ersten Inhalts
Technique for monitoring the quality of an insertion of a second content during the broadcast of a first content

(30) Priorité: 29.09.2009 FR 0956767
(43) Date de publication de la demande: 30.03.2011
(73) Titulaire: Orange, 75015 Paris (FR)
(72) Inventeur: Stephan, Emile, 22560, PLEUMEUR BODOU (FR)

(56) Documents cités:
- WO-A1-2008/123125
- WO-A2-2008/024654
- US-A1- 2008 288 975
- T. KIM, J. BRASSIL: "Dynamic Program Insertion in High Quality Video over IP", ACM, 2 PENN PLAZA, SUITE 701 - NEW YORK USA, 3 janvier 2003 (2003-01-03), pages 32-40, XP040150139,
- SCHULZRINNE H ET AL: "RFC 1889: RTP: A Transport Protocol for Real-Time Applications", NETWORK WORKING GROUP REQUEST FOR COMMENTS, XX, XX, 1 janvier 1996 (1996-01-01), pages 1-38, XP002229836,
- "User requirements for objective perceptual video quality measurements in digital cable television; J.143 (05/00)", ITU-T STANDARD IN FORCE (I), INTERNATIONAL TELECOMMUNICATION UNION, GENEVA, CH, no. J.143 (05/00), 1 mai 2000 (2000-05-01) , XP017401792,

## Description

L'invention se situe dans les domaines des télécommunications et plus particulièrement dans le domaine de la distribution de contenus.

Des méthodes permettant d'insérer dans un premier contenu multimédia un deuxième contenu multimédia, par exemple à des fins publicitaires, existent. Une telle méthode peut s'appuyer par exemple sur des standards spécifiés par le groupe SCTE, pour "Society of Cable Télécommunications Engineers". Ces documents, en particulier les documents SCTE 104 2004, 35 2004, 30 2006, définissent des éléments nécessaires à une mise en oeuvre d'une concaténation de flux élémentaires dans le but de réaliser une insertion de programme numérique. Le document intitulé « Dynamic Program Insertion in High Quality Video over IP » de T. Kim et al. décrit une méthode d'insertion d'un deuxième contenu dans un premier contenu.

Cependant, l'insertion du deuxième contenu dans le premier contenu rompt la fluidité du flux et crée une augmentation instantanée du débit d'information. Cette période d'insertion est susceptible de présenter des disfonctionnements par exemple en perturbant la restitution du début du deuxième contenu à un utilisateur.

Des méthodes de mesure de la qualité de service ou "Quality of Service", notée QoS, ou de la qualité d'expérience ou "Quality of Experience", notée QoE, existent. Toutefois, de telles méthodes ne sont pas adaptées à la supervision de la qualité dans un réseau de communication opérationnel. Elles s'avèrent très consommatrices de ressources du réseau et donnent uniquement une vision d'ensemble de la distribution des contenus.

Un des buts de l'invention est de remédier à des insuffisances/inconvénients de l'état de la technique et/ou d'y apporter des améliorations.

Selon un premier aspect, l'invention a pour objet un procédé de collecte d'informations relatives à une insertion d'un deuxième contenu dans un premier contenu diffusé à destination d'au moins une entité réceptrice dans un réseau de communication, ledit procédé comprenant les étapes suivantes mises en oeuvre par une entité réceptrice :
- une étape d'obtention d'un instant prévu de transition entre les premier et deuxième contenus ;
- une première étape de capture d'une première séquence du contenu reçu au cours d'un premier intervalle de temps encadrant l'instant de transition ;
- une étape d'envoi à un dispositif de supervision d'au moins un rapport d'insertion, ledit rapport d'insertion comprenant au moins une partie de la première séquence capturée lorsque des mesures de qualité de service sont supérieures à un seuil prédéterminé.

Par entité réceptrice, on entend un terminal d'un utilisateur destinataire du premier contenu ou bien un équipement de mesure apte à recevoir différents premiers contenus.

Un équipement de comnande requiert l'insertion du deuxième contenu dans le premier contenu à un instant donné. Par insertion, on entend une interruption du premier contenu pour diffuser le deuxième contenu ou une superposition totale ou partielle du deuxième contenu sur le premier contenu. Deux transitions entre les premier et deuxième contenus vont ensuite se produire : une première transition correspondant au début de l'insertion, une deuxième transition lors de la fin de l'insertion. L'instant prévu de transition peut ainsi correspondre aussi bien à un instant requis de début d'insertion qu'à un instant de fin d'insertion. Les équipements du réseau mettent ensuite en oeuvre l'insertion du deuxième contenu dans le premier contenu. Suivant les manipulations effectuées sur les contenus (par transcodage, utilisation de caches,...), la charge du réseau de communication et la synchronisation dans ce dernier, les instants effectifs de début et de fin d'insertion peuvent varier d'un équipement à un autre. En définissant un intervalle de temps encadrant l'instant de transition, la capture du contenu reçu pendant la période de transition effective entre les deux contenus est garantie. Cette capture est limitée dans le temps et ainsi le volume des données capturées est également limitée. Son envoi par l'entité réceptrice à destination du dispositif de supervision n'est pas susceptible de surcharger le réseau. Seules les informations relatives à la période critique sont transmises. Les ressources du réseau sont ainsi économisées.

L'instant prévu de transition peut être obtenu à l'aide d'informations présentes dans le contenu reçu. Il peut également être obtenu à l'aide d'informations de commande transmises à l'entité réceptrice.

L'entité réceptrice peut transmettre un seul rapport d'insertion comprenant la première séquence ou bien transmettre au fil de l'eau des parties de la première séquence dans une pluralité de rapports d'insertion partiels.

Le rapport d'insertion comprend une partie de la première séquence capturée uniquement lorsque des mesures de qualité de service sont supérieures à un seuil prédéterminé. En effet, lorsque la qualité de service mesurée pendant la période de transition est inférieure à un seuil de qualité de service donnée, la cause peut en être une surcharge du réseau ou du terminal. Il n'est donc pas souhaitable d'augmenter la charge du réseau en transmettant la première séquence du contenu capturée. De plus, cette dernière risque d'être difficilement exploitable par le dispositif de supervision.

Corrélativement, selon un deuxième aspect, l'invention concerne également un procédé de supervision d'une insertion d'un deuxième contenu dans un premier contenu diffusé à destination d'au moins une entité réceptrice dans un réseau de communication,
ledit procédé comprenant les étapes suivantes mises en oeuvre par un dispositif de supervision :
- une étape d'envoi à une entité réceptrice d'un instant prévu de transition entre les premier et deuxième contenus ;
- une étape de réception d'au moins un rapport d'insertion en provenance de ladite entité réceptrice mettant en oeuvre le procédé de collecte tel que décrit précédemment, ledit rapport d'insertion comprenant au moins une partie d'une première séquence du contenu reçu par l'entité réceptrice au cours d'un premier intervalle de temps encadrant l'instant de transition.

Le dispositif de supervision obtient ainsi une capture du contenu reçu pendant une période critique de l'insertion, c'est-à-dire une période de transition entre deux contenus. Toutefois, cette capture de contenu est transmise uniquement lorsque celle-ci est exploitable, c'est-à-dire lorsque les mesures de qualité de service sont supérieures au seuil prédéterminé. Le dispositif de supervision peut alors déterminer une mesure de la qualité d'expérience, qui est par nature très coûteuse en termes de ressources nécessaires, sur cette période très critique. Ainsi, le fournisseur d'un contenu inséré peut obtenir un rapport sur la qualité de l'insertion de son contenu dans un autre.

Ainsi, cette technique de supervision d'une insertion est particulièrement bien adaptée à une mise en oeuvre dans un réseau opérationnel comportant un nombre très élevé de distributions de contenus simultanées.

Selon une caractéristique particulière, le procédé de collecte comprend en outre une deuxième étape de capture d'une deuxième séquence du contenu reçu au cours d'un deuxième intervalle de temps précédant ou suivant ledit instant de transition, le rapport d'insertion envoyé comprenant au moins une partie de la deuxième séquence capturée lorsque les mesures de qualité de service sont supérieures au seuil prédéterminé.

Ainsi, le fournisseur du contenu diffusé peut obtenir un rapport sur la qualité de distribution en dehors de la période de transition entre les deux contenus. Les durées des captures étant limitées, la mise en oeuvre du procédé de collecte ne surcharge pas le réseau opérationnel.

Selon une autre caractéristique particulière, le rapport d'insertion comprend en outre les mesures de qualité de service effectuées lors de la réception de ladite première séquence.

L'entité réceptrice effectue de manière continue des mesures de qualité de service qu'elle transmet à l'équipement lui distribuant le contenu afin que ce dernier optimise le flux de données. Toutefois, ces mesures de qualité de service ne sont pas accessibles à des dispositifs de supervision. La capture de ces mesures pendant la période de transition ne nécessite pratiquement pas l'utilisation de ressources supplémentaires pour l'entité réceptrice et va permettre de fournir au dispositif de supervision des informations complémentaires pour analyser la qualité.

Selon une caractéristique particulière, le procédé de supervision comprend en outre une étape de détermination à partir du rapport d'insertion reçu d'une gigue d'insertion du deuxième contenu, ladite gigue correspondant à un décalage temporel entre l'instant prévu de transition et un instant observé de transition.

Selon une autre caractéristique particulière du procédé de supervision, on détermine en outre une mesure de qualité d'expérience d'insertion du deuxième contenu.

Selon encore une autre caractéristique particulière, le dispositif de supervision recevant une pluralité de rapports d'insertion du deuxième contenu dans le premier contenu en provenance d'une pluralité d'entités réceptrices, le procédé de supervision comprend en outre :
- une étape de sélection d'une entité réceptrice pour laquelle la gigue d'insertion est minimale, ladite entité réceptrice devenant ainsi entité réceptrice de référence ;
- une étape de détermination d'une autre mesure de qualité de l'insertion du deuxième contenu par corrélation entre la première séquence d'un rapport d'insertion reçu d'une entité réceptrice de ladite pluralité et la première séquence du rapport d'insertion reçu de l'entité réceptrice de référence.

Ceci permet d'obtenir des résultats comparables à une méthode utilisant le contenu avant distribution sans nécessiter de mémorisation de ce dernier.

Selon un troisième aspect, l'invention concerne en outre un dispositif de collecte d'informations relatives à une insertion d'un deuxième contenu dans un premier contenu diffusé dans un réseau de communication, ledit dispositif de collecte comprenant :
- des moyens d'obtention d'un instant prévu de transition entre les premier et deuxième contenus ;
- des moyens de capture d'une première séquence du contenu reçu au cours d'un premier intervalle de temps encadrant l'instant de transition ;
- des moyens d'envoi à un dispositif de supervision d'un rapport d'insertion, lesdits moyens d'envoi étant agencés pour inclure dans le rapport d'insertion au moins une partie de la première séquence capturée lorsque des mesures de qualité de service sont supérieures à un seuil prédéterminé.

Selon un quatrième aspect, l'invention concerne en outre un dispositif de supervision d'une insertion d'un deuxième contenu dans un premier contenu diffusé à destination d'au moins une entité réceptrice dans un réseau de communication, ledit dispositif de supervision étant agencé pour coopérer avec une entité réceptrice telle que décrite précédemment et comprenant :
- des moyens d'envoi à l'entité réceptrice d'un instant prévu de transition entre les premier et deuxième contenus ;
- des moyens de réception d'un rapport d'insertion en provenance de l'entité réceptrice, unrapport d'insertion comprenant au moins une partie d'une première séquence du contenu reçu par l'entité réceptrice au cours d'un premier intervalle de temps encadrant l'instant de transition lorsque des mesures de qualité de service sont supérieures à un seuil prédéterminé.

Le dispositif de supervision comprend en outre des moyens de détermination à partir du rapport d'insertion reçu d'une gigue d'insertion du deuxième contenu, ladite gigue correspondant à un décalage temporel entre l'instant prévu de transition et un instant observé de transition.

Selon un cinquième aspect, l'invention concerne en outre un système de supervision d'une insertion d'un deuxième contenu dans un premier contenu diffusé à destination d'au moins une entité réceptrice dans un réseau de communication, ledit système comprenant un dispositif de supervision tel que décrit précédemment et au moins un dispositif de collecte tel que décrit précédemment.

Selon un sixième aspect, l'invention concerne en outre un programme d'ordinateur comportant des instructions pour la mise en oeuvre du procédé de collecte tel que décrit précédemment par un dispositif de collecte, lorsque ce programme est exécuté par un processeur.

Selon un septième aspect, l'invention concerne en outre un programme d'ordinateur comportant des instructions pour la mise en oeuvre du procédé de supervision d'une insertion tel que décrit précédemment par un dispositif de supervision, lorsque ce programme est exécuté par un processeur.

L'invention sera mieux comprise à l'aide de la description suivante de modes de réalisation particuliers des procédés de l'invention, en référence aux dessins annexés sur lesquels :
- la figure 1 représente un système de supervision dans son environnement selon un mode particulier de réalisation de l'invention ;
- la figure 2 représente un schéma simplifié des étapes des procédés mis en oeuvre pour la supervision d'une insertion de contenu selon un mode particulier de réalisation de l'invention ;
- la figure 3 représente une évolution du contenu reçu de manière temporelle selon un mode particulier de réalisation de l'invention ;
- la figure 4 représente un dispositif de collecte selon un mode particulier de réalisation de l'invention ;
- la figure 5 représente un dispositif de supervision selon un mode particulier de réalisation de l'invention.

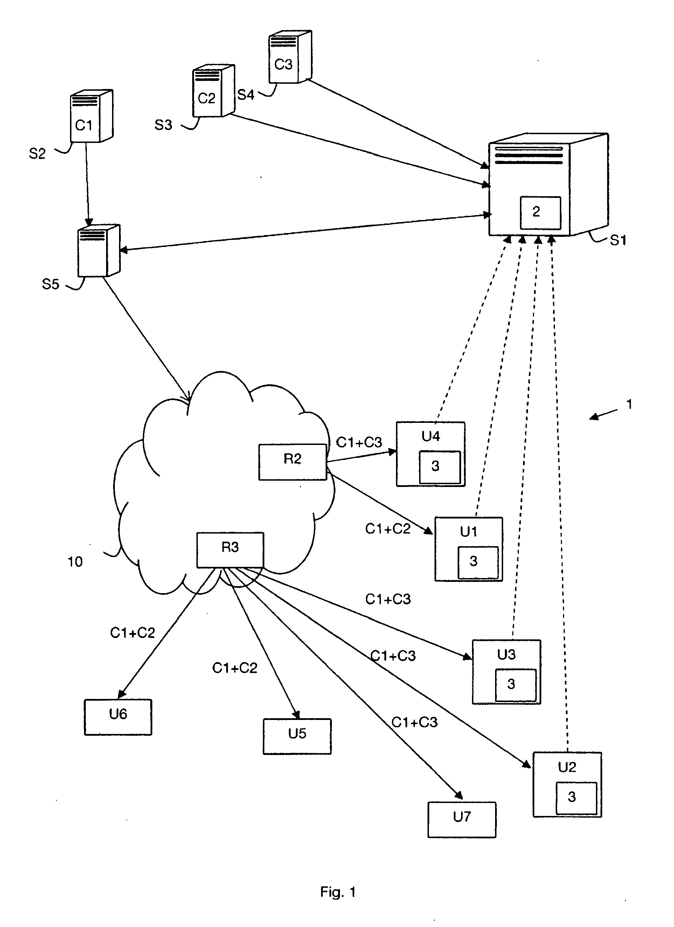

Un système de supervision 1 d'une insertion de contenu dans son environnement va être décrit en relation avec la figure 1 selon un mode particulier de réalisation de l'invention.

On se place ici dans un réseau de communication comprenant des fournisseurs de contenu S2, S3, S4, un serveur S5 de distribution de contenus, un serveur S1 de définition d'insertion de contenus.

Il peut s'agir de contenus diffusés en temps réel, de contenus multimédias susceptibles d'être obtenus à la demande, de contenus multimédias susceptibles d'être diffusés sous forme de flux ou "streaming" en anglais, de contenus d'actualités au format RSS, de livres multimédias...

Le serveur S5 de distribution est en charge de définir un contenu à diffuser ou à distribuer et de commander la diffusion de ce contenu à des équipements intermédiaires R2, R3 d'un réseau de distribution 10. Ces équipements intermédiaires R2, R3 sont par exemple des serveurs diffusant des contenus sous forme de flux ou "streamers" en anglais. Le contenu est ensuite distribué par les équipements intermédiaires R2, R3 à des entités réceptrices U1, ..., U7. Ces dernières peuvent avoir requis la distribution de ce contenu. Il peut également s'agir d'une distribution sans requête ou mode "push". L'équipement intermédiaire R2 diffuse des données aux entités réceptrices U1 et U4. L'équipement intermédiaire R3 diffuse, quant à lui, des données aux entités réceptrices U2, U3, U5-U7. Plus précisément, pour un premier contenu C1, le contenu diffusé aux entités réceptrices comprend des blocs du premier contenu C1, avec le cas échéant des blocs de deuxièmes contenus C2, C3 insérés. Le serveur de distribution S5 communique ainsi aux équipements intermédiaires R2, R3 une commande d'insertion d'un deuxième contenu dans un premier contenu. Par insertion, on entend une interruption du premier contenu pour diffuser le deuxième contenu ou une superposition du deuxième contenu sur le premier contenu. Cette superposition peut être effectuée dans une zone donnée du premier contenu C1 (haut, bas, ...), selon une orientation donnée (horizontal, vertical,...) ou dans une zone extérieure (en dessous, au dessus,...). La commande d'insertion comprend des informations ou données d'insertion, qui permettent de définir à quel instant l'insertion est prévue et doit ainsi être effectuée et quel contenu doit être inséré.

Cette commande d'insertion peut être mise en oeuvre à l'aide de la méthode définie par le groupe STCE. Dans ce cas, les données d'insertion sont portées par le signal lui-même. Un exemple de signal d'insertion de contenu est constitué de la requête Cue_request décrite dans la section 7.4.1 de la spécification SCTE 30 et de sa description splice_info_section() décrite dans section 7.2 de la spécification SCTE 35 (ITU J.181).

Cette commande d'insertion peut également être mise en oeuvre par envoi de données associées au contenu ou métadonnées. De telles données permettent le calcul de l'instant prévu de transition Ti par rapport à une référence temporelle absolue ou relative, par exemple une durée Ts écoulée depuis le début de la diffusion du premier contenu C1. Ceci permet de définir une référence temporelle commune entre le contenu et les métadonnées associées.

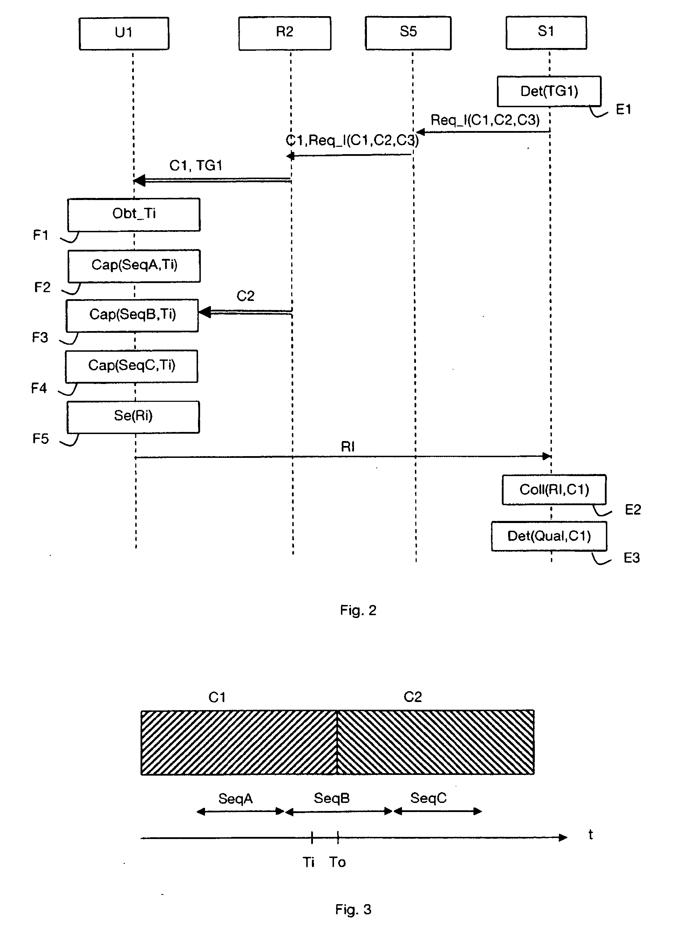

Dans les deux cas, l'équipement intermédiaire R2, R3 insère le deuxième contenu dans le premier contenu à un instant donné Tr. A titre d'exemple, dans le cas d'une insertion par interruption du premier contenu, une partie du contenu tel que reçu par une des entités réceptrices est représenté à la figure 3. Pendant une première période, l'entité réceptrice reçoit le premier contenu C1, puis à un instant noté To, elle reçoit le deuxième contenu C2.

Le schéma inverse se produit en fin d'insertion avec de nouveau une transition au niveau du contenu reçu, cette fois-ci du deuxième contenu vers le premier contenu. On se place par la suite au niveau d'une de ces deux transitions.

L'invention vise ainsi à obtenir des informations relatives à la qualité de l'insertion d'un deuxième contenu dans un premier contenu.

A cet effet, le système de supervision 1 comprend un dispositif de supervision 2 d'insertion de contenus et des dispositifs de collecte 3. Sur la figure 1, les entités réceptrices U1, U2, U3, U4 comprennent de tels dispositifs 3 de collecte. Le dispositif de supervision 2 peut être intégré dans le serveur S1 de définition d'insertion de contenus, tel que cela est représenté sur la figure 1. Il peut également être intégré dans un serveur autonome, associé au serveur S1 afin d'obtenir les données d'insertion.

L'entité réceptrice U3 est un équipement de mesure placé dans le réseau, apte à réaliser des mesures de qualité de vidéo, de qualité de service (QoS), ou d'expérience (QoE).

A titre d'exemple, lorsqu'il s'agit de données temps réel émises selon le protocole RTP, pour "Real Time Protocol", la qualité de service peut être estimée à partir d'un nombre de paquets RTP reçus, un taux de paquets RTP perdus, une gigue inter-arrivée. Ces mesures de qualité de service sont transmises à la source des données conformément à la norme RFC 3550 dans des données de contrôle associées RTCP XR selon le protocole RTCP, pour "Real Time Control Protocol". Ces données de contrôle RTCP XR sont décrites à l'adresse http://tools.ietf.org/wg/avt.

Toujours à titre d'exemple, les mesures d'une qualité d'une vidéo ou qualité d'expérience (QoE) peuvent être réalisées tel que spécifié dans la norme J. 247 de l'ITU-T, pour "International Telecommunication Union". Selon cette norme, il existe trois modèles pour réaliser des mesures :
- le modèle "Full Reference", ou FR, est basé sur la comparaison du contenu reçu au contenu émis ;
- le modèle "Relative Reference", ou RR, est basé sur la comparaison d'une partie du contenu reçu avec le contenu émis ;
- le modèle "No Reference", ou NR, analyse les entêtes des paquets. Il s'agit par exemple d'élaborer un indicateur en fonction de la nature des blocs d'informations perdus.

Les entités réceptrices H1, H2, H4-H7 peuvent être des terminaux fixes ou des terminaux sans fil.

De retour à la figure 3, trois séquences sont identifiées :
- la première séquence SeqA est constituée de blocs du premier contenu C1 ;
- la deuxième séquence SeqB est constituée à la fois de blocs du premier contenu C1 et de blocs du deuxième contenu C2 ;
- la troisième séquence SeqC est constituée de blocs du deuxième contenu C2.

Selon l'invention, le dispositif de supervision 2 va obtenir en provenance d'un ensemble de terminaux au moins la deuxième séquence SeqB reçue. La deuxième séquence SeqB est particulièrement intéressante car elle est représentative d'une qualité au moment d'une transition entre les deux contenus et ainsi de la qualité de l'insertion du deuxième contenu dans le premier contenu. A partir de ces deuxièmes séquences SeqB reçues, le dispositif de supervision 2 détermine des indicateurs représentatifs de la qualité.

Le procédé de collecte d'informations relatives à l'insertion d'un deuxième contenu C2 dans le premier contenu C1 tel que mis en oeuvre par un dispositif de collecte 3 et le procédé de supervision de cette insertion tel que mis en oeuvre par le dispositif de supervision 2 vont maintenant être décrits en relation avec la figure 2.

Par la suite, on se place dans le cas où les données d'insertion sont définies dans des métadonnées associées au contenu.

Préalablement aux étapes représentées sur la figure 2, le serveur de distribution S1 reçoit en provenance du fournisseur de contenu S2 le premier contenu C1 à diffuser. Le serveur S1 de définition d'insertion de contenu reçoit en provenance du fournisseur de contenu S3, respectivement S4, le deuxième contenu C2, respectivement C3, à diffuser accompagné des métadonnées décrivant des profils d'insertion souhaités. Il s'agit par exemple d'un type de contenu, d'un type d'utilisateurs, d'une région, d'une durée, d'un nombre d'occurrences, d'un critère d'étalement des occurrences, d'une requête d'un rapport d'insertion, d'un type d'insertion. Cette liste n'est pas limitative.

Le serveur de distribution S5 prépare la distribution du premier contenu C1 et fournit au serveur de définition d'insertion S1 des métadonnées associées au premier contenu C1. Les métadonnées associées décrivent la programmation du premier contenu C1, le premier contenu C1, des profils d'insertion de contenu (profils régionaux par exemple).

Dans une étape E1 du procédé de supervision, le serveur de définition d'insertion S1 détermine des instants d'insertion et des zones géographiques d'insertion du deuxième contenu C2 et du troisième contenu C3 dans le premier contenu C1 et regroupe ces informations dans des métadonnées d'insertion TG1 du premier contenu C1. Les métadonnées d'insertion TG1, le deuxième contenu C2 et le troisième contenu C3 sont transmis au serveur de distribution S5, cette transmission étant symbolisée par le message Req_I(C1,C2,C3) sur la figure 2. Les métadonnées d'insertion TG1 requièrent une insertion de contenus, C2 ou C3, dans le premier contenu C1 en fonction de critères donnés.

Le message est retransmis par le serveur de distribution S5 vers les équipements intermédiaires R2, R3, ainsi que le premier contenu C1.

Les équipements intermédiaires R2, R3 analysent les métadonnées d'insertion TG1. Si les métadonnées indiquent qu'un rapport d'insertion est requis, les équipements intermédiaires déterminent des terminaux U1-U7 parmi l'ensemble des terminaux ayant souscrit à la diffusion du premier contenu C1, ces terminaux U1-U7 répondant aux critères de sélection décrits dans les métadonnées d'insertion TG1 dans la limite de règles préétablies, telles qu'un nombre maximum de rapports d'insertion, afin de ne pas dégrader les performances du réseau, des terminaux et du serveur S1 de définition d'insertion.

Dans l'exemple de la figure 1, les métadonnées d'insertion TG1 sont transmises vers les terminaux U1, U2, U3, U4 et U5. Seuls ces terminaux déterminés vont transmettre un rapport d'insertion RI au dispositif de supervision 2.

A titre d'exemple et tel que représenté sur la figure 1, à partir des métadonnées d'insertion TG1, l'équipement intermédiaire R2 insère le deuxième contenu C2 au premier contenu C1 pour la distribution vers le terminal U1 et insère le troisième contenu C3 au premier contenu C1 pour le terminal U4. L'équipement intermédiaire R3 insère le deuxième contenu C2 au premier contenu C1 pour la distribution du premier contenu C1 vers les terminaux U5 et U6 et insère le troisième contenu C3 au premier contenu C1 pour la distribution du premier contenu C1 vers les terminaux U2, U3 et U7.

La détermination par un équipement intermédiaire R2, R3 du contenu à insérer dans le premier contenu C1 a été définie par le serveur de distribution S5 et s'effectue en fonction de critères associant des profils d'insertion à des zones géographiques pour le premier contenu C1.

On se place par la suite au niveau du terminal U1. Celui-ci reçoit un contenu et des métadonnées d'insertion TG1. Dans une étape F1 du procédé de collecte, le dispositif de collecte 3 du terminal U1 détermine à partir des métadonnées d'insertion TG1 qu'il doit transmettre un rapport d'insertion RI au dispositif de supervision 2. Il obtient également à partir des métadonnées d'insertion TG1 l'instant prévu de transition Ti et la durée Ts écoulée depuis le début de la diffusion du premier contenu C1. A partir de ces valeurs Ti et Ts, d'une durée d'un premier intervalle d'observation Da associé à la séquence SeqA, d'une durée d'un deuxième intervalle d'observation Db associé à la séquence SeqB, d'une durée d'un troisième intervalle d'observation Dc associé à la séquence SeqC, le dispositif de collecte 3 détermine un enchaînement d'observations à effectuer et trois périodes pendant lesquelles il doit effectuer ces observations : une période avant l'insertion, une période encadrant l'instant de transition, une période après l'insertion. Les durées des intervalles d'observation Da, Db et Dc peuvent être présentes dans les métadonnées d'insertion TG1 ou bien être définies lors de la configuration. A titre d'exemple, on peut choisir une durée allant de quelques dixièmes de secondes à une seconde pour Da, Db et Dc.

Dans une étape F2 du procédé de collecte, le dispositif de collecte 3 capture et enregistre des informations relatives à une séquence du contenu tel que reçu dans la période avant insertion. Dans ce premier mode de réalisation, les informations enregistrées sont la séquence du contenu tel que reçu. Cet enregistrement correspond à une séquence SeqA, contenant en tant que contenu le premier contenu C1. Ceci permet ensuite au dispositif de supervision 2 d'estimer la qualité obtenue avant insertion du deuxième contenu.

Dans une étape F3 du procédé de collecte, le dispositif de collecte 3 capture et enregistre une séquence du contenu tel que reçu pendant la période encadrant l'instant de transition. Cet enregistrement correspond à une séquence SeqB, contenant en tant que contenu le premier contenu C1 suivi du deuxième contenu C2. Ceci permet ensuite au dispositif de supervision 2 d'estimer la qualité obtenue pendant l'insertion du deuxième contenu.

Dans une étape F4 du procédé de collecte, le dispositif de collecte 3 capture et enregistre des informations relatives à une séquence du contenu tel que reçu pendant la période après insertion. Dans ce premier mode de réalisation, les informations enregistrées sont la séquence du contenu tel que reçu. Cet enregistrement correspond à une séquence SeqC, contenant en tant que contenu le deuxième contenu C2. Ceci permet ensuite au dispositif de supervision 2 d'estimer la qualité du deuxième contenu C2 après insertion.

Dans une étape F5 du procédé de collecte, le dispositif de collecte 2 transmet au dispositif de supervision 2 un rapport d'insertion RI(U1,C1,C2), comprenant l'enregistrement pendant la période avant insertion, l'enregistrement pendant la période encadrant l'instant de transition, l'enregistrement pendant la période après l'insertion.

Ce rapport d'insertion en provenance du dispositif de collecte 3 du terminal U1 est reçu par le dispositif de supervision 2 pendant une étape E2 du procédé de supervision.

Comme décrit précédemment pour le terminal U1, le dispositif de supervision 2 reçoit un rapport d'insertion RI(U4,C1,C3) en provenance du terminal U4, un rapport d'insertion RI(U2,C1,C3) en provenance du terminal U2, un rapport d'insertion RI(U3,C1,C3) en provenance du terminal U3 et un rapport d'insertion RI(U1,C1,C3) en provenance du terminal U1.

Dans une étape E3 du procédé de supervision, le dispositif de supervision 2 détermine à partir des rapports d'insertion reçus la qualité de l'insertion du deuxième contenu C2 dans le premier contenu C1, la qualité de l'insertion du troisième contenu C3 dans le premier contenu C1, la qualité du premier contenu C1, la qualité du deuxième contenu C2, la qualité du troisième contenu C3.

Plus précisément, le dispositif de supervision 2 regroupe les rapports d'insertion reçus relatifs au premier contenu C1. Il sépare ensuite en deux groupes les rapports d'insertion: un premier groupe correspondant à l'insertion du deuxième contenu C2, un deuxième groupe correspondant à l'insertion du troisième contenu C3.

Le dispositif de supervision 2 détermine ensuite la qualité d'expérience QoE pour chacune des séquences SeqA, SeqB, SeqC selon une méthode de type NR.

Les séquences SeqB comprenant une observation de la période de transition entre deux contenus font l'objet d'une analyse plus fine.

Pour chaque séquence SeqB dont le niveau de QoE est supérieur à un seuil de qualité d'expérience prédéterminé, le dispositif de supervision 2 analyse la séquence SeqB et mesure une gigue d'insertion dans le premier contenu C1. Cette gigue d'insertion correspond à un décalage temporel entre l'instant prévu de transition et un instant de transition déterminé à partir de la séquence SeqB.

En option, le dispositif de supervision 2 effectue une corrélation entre deux séquences SeqB obtenues respectivement de deux terminaux.

Dans une première variante à cette option, le dispositif de supervision 2 sélectionne un terminal pour lequel le rapport d'insertion pour la première transition (début d'insertion) a montré une gigue d'insertion minime, ce terminal devenant terminal de référence. Puis, le dispositif de supervision 2 utilise ce terminal de référence pour comparer avec le rapport d'insertion de ce dernier les rapports d'insertion reçus d'autres terminaux pour la deuxième transition (fin d'insertion). Ceci permet d'obtenir des résultats comparables à ceux obtenus avec une méthode de type FR sans nécessiter de mémorisation au préalable des contenus.

Dans une deuxième variante à cette option, le dispositif de supervision 2 effectue la corrélation par différences entre deux séquences provenant respectivement de terminaux pour lesquels le contenu inséré est différent. Par itérations successives, il est possible de déterminer dans chacune des séquences le premier contenu C1 commun aux deux séquences ainsi une gigue d'insertion.

En option, le dispositif de supervision 2 peut également détecter un décalage entre l'insertion demandée, en termes de taille, de position ou autres, et l'insertion réalisée. A cet effet, le dispositif de supervision 2 effectue une analyse adaptée à la technique d'insertion utilisée (espace réservé dans le premier contenu C1 par le serveur de distribution S5 pour l'insertion, superposition, insertion en haut, en bas, en dessous d'une image...). Il s'agit par exemple d'une combinaison de traitement du signal vidéo et d'analyses sémantiques. A titre d'exemple non limitatif, dans le cas où le serveur de distribution S5 a réservé un espace dans le premier contenu C1 pour l'insertion d'un deuxième contenu en décalant des blocs du premier contenu C1 et lorsque l'insertion est réalisée ultérieurement à l'instant prévu de transition, il y a une absence de son et d'image automatiquement détectable. Toujours dans le même cas, lorsque l'insertion est réalisée en avance par rapport à l'instant prévu de transition, l'analyse sémantique détecte une fin anormale de scène.

Puis, le dispositif de supervision 2 produit des rapports décrivant la distribution des trois contenus C1, C2 et C3. Il s'agit en particulier de :
- la qualité d'expérience QoE de la distribution du premier contenu C1 accessible par le fournisseur de contenu S2 et le serveur de distribution S5 ;
- un indice de performance pour le deuxième contenu C2, notamment la QoE et la gigue d'insertion, accessible par le fournisseur de contenu S3 ;
- un indice de performance pour le troisième contenu C3, notamment la QoE et la gigue d'insertion, accessible par le fournisseur de contenu S4 ;
- un relevé de distribution pour les deuxième C2 et troisième C3 contenus, comprenant notamment un nombre de distributions effectuées, un nombre de distributions ayant fait l'objet d'un rapport d'insertion, une moyenne de l'indice de performance, une répartition du nombre de distribution en fonction de niveaux de qualité.

Ainsi, grâce aux procédés de l'invention, il est possible d'obtenir des informations de qualité relatives à des moments critiques dans la distribution d'un contenu sans mettre en oeuvre des méthodes complexes et consommatrices de ressources matérielles et réseau.

Dans un deuxième mode de réalisation, lors des étapes préalables, le dispositif de supervision 2 enregistre les premiers blocs des deuxième C2 et troisième C3 contenus. Le dispositif de supervision 2 effectue alors une mesure de la qualité d'expérience QoE selon une méthode de type FR puis recherche la présence du début du deuxième contenu C2 ou du troisième contenu C3 dans la séquence SeqB enregistrée pendant la période encadrant la transition. On obtient ainsi une mesure plus précise de la qualité d'expérience pendant l'insertion.

Dans ces premier et deuxième modes de réalisation, le dispositif de collecte 3 enregistre les parties du contenu pour les séquences avant insertion SeqA et après insertion SeqB.

En première variante à ces deux modes, le dispositif de collecte 3 enregistre lors de l'étape F2 en tant qu'informations relatives à la période avant insertion, les messages de rapport qu'il a transmis à l'équipement intermédiaire R2, R3 distribuant le contenu pendant cette période. Il s'agit par exemple de messages de rapports RTCP. De même, lors de l'étape F4, le dispositif de collecte 3 enregistre en tant qu'informations relatives à la période après insertion les messages de rapport RTCP qu'il a transmis à l'équipement distribuant le contenu pendant cette période. Lors de l'étape F3, le dispositif de collecte 3 enregistre en outre les messages de rapport RTCP qu'il a transmis à l'équipement distribuant le contenu pendant la période encadrant la transition. Le rapport d'insertion comprend alors, en complément de l'enregistrement de la partie du contenu reçu pendant la deuxième période, les messages de rapport RTCP transmis à l'équipement intermédiaire distribuant le contenu pendant les trois périodes. Cette deuxième variante est particulièrement adaptée à des terminaux disposant de ressources limitées d'enregistrement. Dans ce cas, lors de l'étape E3, le dispositif de supervision 3 déduit une qualité d'expérience QoE à partir de mesures de qualité de service QoS contenues dans le rapport d'insertion RI.

Le dispositif de collecte 3 n'inclut pas les séquences du contenu avant insertion, encadrant la transition et après insertion dans le rapport d'insertion RI lorsque les messages de rapport RTCP pendant la période encadrant la transition indiquent une qualité de service inférieure à un seuil de qualité de service prédéterminé. Ceci évite de transmettre au dispositif de supervision 2 des informations qui ne sont pas exploitables. Il n'y a ainsi pas de charge supplémentaire pour le réseau alors que ce dernier rencontre des conditions dégradées pour la distribution du contenu à ce terminal. Le dispositif de collecte 3 transmet cependant les messages de rapport RTCP transmis à l'équipement intermédiaire distribuant le contenu dans les rapports d'insertion. Le dispositif de collecte 3 peut également arrêter la capture des séquences, ceci permettant de limiter la consommation de ressources pour le terminal.

En deuxième variante à ces deux modes, le dispositif de collecte 3 est intégré dans une sonde de mesure, telle que le terminal H3. Dans ce cas, le dispositif de collecte 3 effectue une mesure de la qualité d'expérience QoE pour chacune des séquences SeqA, SeqB, SeqC enregistrées. Le rapport d'insertion RI comprend alors en complément de l'enregistrement de la séquence du contenu reçu pendant la période encadrant la transition, les mesures de qualité vidéo (telles que décrites dans la norme J. 247 de l'ITU-T) et de qualité d'expérience QoE pendant les trois périodes.

En troisième variante à ces deux modes, le dispositif de collecte 3 ne transmet pas d'informations relatives aux périodes avant et/ou suivant l'insertion. Les étapes F2 et F4 ne sont donc pas effectuées. L'analyse se focalise dans ce cas sur la période critique de l'insertion.

En quatrième variante à ces deux modes, le type de rapport d'insertion demandé, c'est-à-dire la mise en oeuvre de l'une des variantes précédentes, est déterminé en fonction des capacités du terminal. Il est également possible de prendre en compte le support ou non du procédé de collecte selon l'invention afin d'accueillir dans le réseau des terminaux ne supportant pas le procédé de collecte.

En cinquième variante à ces deux modes, le dispositif de collecte 3 transmet au fil de l'eau des parties du contenu pendant les périodes avant insertion, encadrant l'instant prévu de transition et après insertion, dans des rapports d'insertion partiels. Cette cinquième variante permet de mettre en oeuvre le procédé de collecte selon l'invention sans nécessiter de capacités de mémorisation supplémentaires. Le dispositif de supervision 2 agrège les rapports d'insertion partiels en un rapport d'insertion comprenant la séquence complète.

Les modes de réalisation ont été décrits pour une méthode d'insertion pour laquelle des métadonnées d'insertion sont associées au premier contenu C1. Ils sont également applicables aux méthodes dans lesquelles un signal d'insertion est transmis dans le premier contenu C1.

Les modes de réalisation ont été décrits pour une mise en oeuvre d'un canal de contrôle du flux conforme au protocole RTCP et ses extensions. Il peut également s'agir d'autres protocoles tels que RTSP ("Real Time Streaming Protocol") ou tout autre protocole propriétaire.

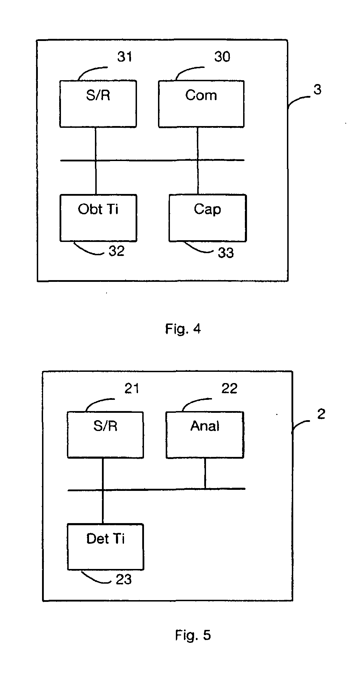

Nous allons maintenant décrire un dispositif 3 de collecte d'informations relatives à une insertion selon un mode particulier de réalisation en relation avec la figure 4.

Un tel dispositif 3 de collecte comprend :
- un module 30 de commande ;
- un module 31 d'émission et de réception, agencé pour recevoir un contenu diffusé et pour envoyer des rapports d'insertion d'un deuxième contenu dans un premier contenu à un dispositif 2 de supervision ;
- un module 32 d'obtention d'un instant prévu de transition entre les premier et deuxième contenus ;
- un module 33 de capture d'une première séquence du contenu reçu au cours d'un premier intervalle de temps encadrant l'instant de transition.

Le module 30 de commande est agencé pour insérer dans le rapport d'insertion au moins une partie de la première séquence du contenu capturée.

Le module 31 peut être agencé pour recevoir des métadonnées d'insertion associées à un contenu. Dans ce cas, le module 32 est agencé pour obtenir l'instant prévu de transition à partir des métadonnées.

Le module 31 peut également être agencé pour recevoir un signal d'insertion dans le contenu. Dans ce cas, le module 32 est agencé pour obtenir l'instant prévu de transition à partir de ce signal d'insertion.

De façon optionnelle, le module 33 d'enregistrement est agencé pour capturer une deuxième séquence du contenu reçu au cours d'un deuxième intervalle de temps précédant ou suivant ledit instant de transition. Le module 30 de commande est dans ce cas agencé pour inclure dans le rapport d'insertion envoyé la deuxième séquence capturée.

Le module 31 d'émission/réception est agencé pour transmettre des mesures de qualité de service à l'équipement distribuant le contenu, par exemple RTCP. Dans ce cas, le module 33 d'enregistrement est agencé pour capturer des mesures de qualité de service effectuées lors de la réception de la première partie. Le module 30 de commande est dans ce cas agencé pour inclure dans le rapport d'insertion ces mesures de qualité de service.

Le module 30 de commande les inclut uniquement lorsque les mesures de qualité de service sont supérieures à un seuil prédéterminé.

Le dispositif de collecte 3 est destiné à être intégré dans un terminal.

Nous allons maintenant décrire un dispositif 2 de supervision d'une insertion selon un mode particulier de réalisation en relation avec la figure 5.

Un tel dispositif 2 de supervision comprend :
- un module 23 de détermination d'un instant prévu de transition entre les premier et deuxième contenus ;
- un module 21 d'émission/réception, agencé pour envoyer à une entité réceptrice l'instant prévu de transition et pour recevoir un rapport d'insertion ;
- un module 22 de détermination à partir du rapport d'insertion reçu d'une mesure de qualité de l'insertion du deuxième contenu.

Le rapport d'insertion peut être complet ou partiel. Il peut comprendre une première séquence du contenu reçu par l'entité réceptrice au cours d'un premier intervalle de temps encadrant l'instant de transition. Il peut également s'agir d'un rapport d'insertion partiel, comprenant une partie de la première séquence. Dans ce cas, le module 22 agrège les rapports d'insertion partiels en un rapport d'insertion avant détermination de la mesure de qualité de l'insertion.

Dans un mode particulier, le module 22 détermine la mesure de qualité de l'insertion du deuxième contenu par corrélation entre une pluralité de rapports d'insertion reçus en provenance de différentes entités réceptrices.

Les modules 30, 31, 32, 33 du dispositif 3 de collecte sont agencés pour mettre en oeuvre les étapes du procédé de collecte d'informations précédemment décrit exécutées par le dispositif de collecte. Il s'agit de préférence de modules logiciels comprenant des instructions logicielles pour faire exécuter celles des étapes du procédé de collecte précédemment décrit, mises en oeuvre par un dispositif de collecte. L'invention concerne donc aussi :
- un programme pour dispositif de collecte, comprenant des instructions de programme destinées à commander l'exécution des étapes du procédé de collecte précédemment décrit qui sont exécutées par ledit dispositif, lorsque ledit programme est exécuté par un processeur de celui-ci ;
- un support d'enregistrement lisible par un dispositif de collecte sur lequel est enregistré le programme pour dispositif de collecte.

Les modules 21, 22, 23 du dispositif de supervision 2 sont agencés pour mettre en oeuvre les étapes du procédé de supervision d'une insertion précédemment décrit exécutées par le dispositif de supervision. Il s'agit de préférence de modules logiciels comprenant des instructions logicielles pour faire exécuter celles des étapes du procédé de supervision précédemment décrit, mises en oeuvre par un dispositif de supervision. L'invention concerne donc aussi :
- un programme pour dispositif de supervision d'une insertion, comprenant des instructions de programme destinées à commander l'exécution des étapes du procédé de supervision précédemment décrit qui sont exécutées par ledit dispositif, lorsque ledit programme est exécuté par un processeur de celui-ci ;
- un support d'enregistrement lisible par un dispositif de supervision d'une insertion sur lequel est enregistré le programme pour dispositif de supervision.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 1 de supervision d'une insertion d'un deuxième contenu dans un premier contenu diffusé à au moins une entité réceptrice dans un réseau de communication comprenant un dispositif de supervision et au moins un dispositif de collecte d'informations relatives à cette insertion, tels que décrits précédemment.

## Revendications

1. Procédé de collecte d'informations relatives à une insertion d'un deuxième contenu (C2, C3) dans un premier contenu (C1) diffusé à destination d'au moins une entité réceptrice (U1-U7) dans un réseau de communication,
ledit procédé de collecte comprenant les étapes suivantes mises en oeuvre par une entité réceptrice :
- une étape d'obtention (F1) d'un instant prévu de transition entre les premier et deuxième contenus ;
- une étape de mesure d'une qualité de service du contenu reçu, afin d'obtenir des rapports de mesure de qualité de service ;
**caractérisé en ce que** le procédé comprend en outre :
- une première étape de capture (F3) d'une première séquence du contenu reçu au cours d'un premier intervalle de temps encadrant l'instant de transition ;
- une étape d'envoi (F5) à un dispositif (2, S1) de supervision d'au moins un rapport d'insertion,
ledit rapport d'insertion comprenant, uniquement lorsque les rapports de mesure de qualité de service pour ledit premier intervalle de temps indiquent que la qualité de service est supérieure à un seuil prédéterminé, au moins une partie de la première séquence capturée.

2. Procédé de collecte selon la revendication 1, comprenant en outre une deuxième étape de capture (F2, F4) d'une deuxième séquence du contenu reçu au cours d'un deuxième intervalle de temps précédant ou suivant ledit instant de transition, le rapport d'insertion envoyé comprenant en outre au moins une partie de la deuxième séquence capturée uniquement lorsque les rapports de mesure de qualité de service indiquent que la qualité de service est supérieure au seuil prédéterminé

3. Procédé de collecte selon la revendication 1, dans lequel le rapport d'insertion comprend en outre les rapports de mesure de qualité de service effectuées lors de la réception de ladite première séquence.

4. Procédé de supervision d'une insertion d'un deuxième contenu (C2, C3) dans un premier contenu (C1) diffusé à destination d'au moins une entité réceptrice (U1-U7) dans un réseau de communication, ledit procédé de supervision comprenant les étapes suivantes :
- une étape d'envoi à l'entité réceptrice par un dispositif de supervision d'un instant prévu de transition entre les premier et deuxième contenus ;
- une étape de collecte par une entité réceptrice d'informations relatives à une insertion d'un deuxième contenu (C2,C3) dans un premier contenu (C1) selon le procédé de la revendication 1
- une étape de réception par le dispositif de supervision d'un rapport d'insertion en provenance de l'entité réceptrice comprenant, uniquement lorsque les rapports de mesure de qualité de service indiquent que la qualité de service est supérieure à un seuil prédéterminé, au moins une partie d'une première séquence de contenu reçu par l'entité réceptrice au cours d'un premier intervalle de temps encadrant l'instant d'utilisation ;
- une étape de détermination (E3) par le dispositif de supervision à partir du rapport d'insertion reçu d'une qualité d'insertion du deuxième contenu dans le premier contenu.

5. Procédé de supervision selon la revendication 4, dans lequel lors de l'étape de détermination de la qualité d'insertion, on détermine une gigue d'insertion du deuxième contenu, ladite gigue correspondant à un décalage temporel entre l'instant prévu de transition et un instant observé de transition.

6. Procédé de supervision selon la revendication 4, dans lequel lors de l'étape de détermination de la qualité d'insertion, on détermine une mesure de qualité d'expérience d'insertion du deuxième contenu.

7. Procédé selon la revendication 5, dans lequel le dispositif de supervision reçoit une pluralité de rapports d'insertion du deuxième contenu dans le premier contenu en provenance d'une pluralité d'entités réceptrices, relatifs à un premier instant de transition entre le premier contenu et le deuxième contenu, correspondant au début d'insertion, et à un deuxième instant de transition entre le deuxième contenu et le premier contenu, correspondant à la fin d'insertion,
ledit procédé comprend en outre une étape de sélection d'une entité réceptrice pour laquelle la gigue d'insertion pour le début d'insertion est minimale, ladite entité réceptrice devenant ainsi entité réceptrice de référence ;
l'étape de détermination de la qualité d'insertion comprenant la comparaison, pour le deuxième instant de transition, du rapport d'insertion provenant de l'entité réceptrice de référence avec les rapports d'insertion provenant des autres entités réceptrices de la pluralité d'entités réceptrices.

8. Procédé selon la revendication 5, dans lequel, outre le rapport d'insertion d'un deuxième contenu dans le premier contenu provenant d'une première entité réceptrice, le dispositif de supervision reçoit un rapport d'insertion d'un troisième contenu, différent du deuxième contenu, dans le premier contenu en provenance d'une deuxième entité réceptrice, relatif à un premier instant de transition entre le premier contenu et le troisième contenu, correspondant au début d'insertion, et à un deuxième instant de transition entre le troisième contenu et le premier contenu, correspondant à la fin d'insertion,
l'étape de détermination de la qualité d'insertion comprenant une corrélation entre une séquence du contenu reçu par la première entité réceptrice au cours d'un intervalle de temps encadrant la fin d'insertion comprise dans le rapport d'insertion reçu de ladite première entité réceptrice et une séquence du contenu reçu par ladite deuxième entité réceptrice au cours d'un intervalle de temps encadrant la fin d'insertion comprise dans le rapport d'insertion reçu de la deuxième entité réceptrice.

9. Dispositif de collecte (3) d'informations relatives à une insertion d'un deuxième contenu (C2, C3) dans un premier contenu (C1) diffusé dans un réseau de communication, ledit dispositif de collecte comprenant :
- des moyens (32) d'obtention d'un instant prévu de transition entre les premier et deuxième contenus ;
- des moyens d'obtention de mesures d'une qualité de service du contenu reçu, afin d'obtenir des rapports de mesure de qualité de service ;
**caractérisé en ce que** le dispositif de collecte comprend en outre :
- des moyens (33) de capture d'une première séquence du contenu reçu au cours d'un premier intervalle de temps encadrant l'instant de transition ;
- des moyens (31) d'envoi à un dispositif de supervision d'un rapport d'insertion, lesdits moyens d'envoi étant agencés pour inclure dans le rapport d'insertion, uniquement lorsque les rapports de mesure de qualité de service pour ledit premier intervalle de temps indiquent que la qualité de service est supérieure à un seuil prédéterminé, au moins une partie de la première séquence capturée.

10. Système de supervision (2) d'une insertion d'un deuxième contenu (C2, C3) dans un premier contenu (C1) diffusé à destination d'au moins une entité réceptrice (U1-U7) dans un réseau de communication, ledit système comprenant au moins un dispositif de collecte selon la revendication 9 et comprenant un dispositif de supervision agencé pour coopérer avec ledit dispositif de collecte, ledit dispositif de supervision comprenant :
- des moyens d'envoi (21) à l'entité réceptrice d'un instant prévu de transition entre les premier et deuxième contenus ;
- des moyens de réception (21) d'un rapport d'insertion en provenance de l'entité réceptrice, un rapport d'insertion comprenant, uniquement lorsque les rapports de mesure de qualité de service indiquent que la qualité de service est supérieure à un seuil prédéterminé, au moins une partie d'une première séquence du contenu reçu par l'entité réceptrice au cours d'un premier intervalle de temps encadrant l'instant de transition ;.
- des moyens de détermination à partir du rapport d'insertion reçu d'une qualité d'insertion du deuxième contenu dans le premier contenu.

11. Système de supervision selon la revendication 10, dans lequel le dispositif de supervision comprend en outre des moyens de détermination (22) à partir du rapport d'insertion reçu d'une gigue d'insertion du deuxième contenu, ladite gigue correspondant à un décalage temporel entre l'instant prévu de transition et un instant observé de transition.

12. Programme d'ordinateur comportant des instructions pour la mise en oeuvre du procédé de collecte selon la revendication 1 par un dispositif de collecte, lorsque ce programme est exécuté par un processeur.

## Patentansprüche

1. Verfahren zum Sammeln von Informationen bezüglich einer Einfügung eines zweiten Inhalts (C2, C3) in einen ersten Inhalt (C1), der an mindestens eine Empfangseinheit (U1-U7) in einem Kommunikationsnetz ausgestrahlt wird,
wobei das Sammelverfahren die folgenden Schritte enthält, die von einer Empfangseinheit durchgeführt werden:
- einen Schritt des Erhalts (F1) eines vorgesehenen Übergangsmoments zwischen dem ersten und dem zweiten Inhalt;
- einen Schritt des Messens einer Dienstqualität des empfangenen Inhalts, um Dienstqualitäts-Messberichte zu erhalten;
**dadurch gekennzeichnet, dass** das Verfahren außerdem enthält:
- einen ersten Schritt der Erfassung (F3) einer ersten Folge des während eines den Übergangsmoment umrahmenden ersten Zeitraums empfangenen Inhalts;
- einen Schritt des Sendens (F5) mindestens eines Einfügungsberichts an eine Überwachungsvorrichtung (2, S1), wobei der Einfügungsbericht nur wenn die Dienstqualitäts-Messberichte für den ersten Zeitraum anzeigen, dass die Dienstqualität höher ist als eine vorbestimmte Schwelle, mindestens einen Teil der ersten erfassten Folge enthält.

2. Sammelverfahren nach Anspruch 1, das außerdem einen zweiten Schritt der Erfassung (F2, F4) einer zweiten Folge des während eines zweiten Zeitraums vor oder nach dem Übergangsmoment empfangenen Inhalts enthält, wobei der gesendete Einfügungsbericht außerdem mindestens einen Teil der zweiten erfassten Folge nur dann enthält, wenn die Dienstqualitäts-Messberichte anzeigen, dass die Dienstqualität höher ist als eine vorbestimmte Schwelle.

3. Sammelverfahren nach Anspruch 1, wobei der Einfügungsbericht außerdem die Dienstqualitäts-Messberichte enthält, die beim Empfang der ersten Folge ausgeführt wurden.

4. Verfahren zur Überwachung einer Einfügung eines zweiten Inhalts (C2, C3) in einen ersten Inhalt (C1), der an mindestens eine Empfangseinheit (U1-U7) in einem Kommunikationsnetz ausgestrahlt wird, wobei das Überwachungsverfahren die folgenden Schritte enthält:
- einen Schritt des Sendens eines vorgesehenen Übergangsmoments zwischen dem ersten und dem zweiten Inhalt durch eine Überwachungsvorrichtung an die Empfangseinheit;
- einen Schritt des Sammelns von Informationen bezüglich einer Einfügung eines zweiten Inhalts (C2, C3) in einen ersten Inhalt (C1) gemäß dem Verfahren des Anspruchs 1 durch eine Empfangseinheit;
- einen Schritt des Empfangs eines Einfügungsberichts von der Empfangseinheit durch die Überwachungsvorrichtung, der nur wenn die Dienstqualitäts-Messberichte anzeigen, dass die Dienstqualität höher ist als eine vorbestimmte Schwelle, mindestens einen Teil einer ersten Folge des Inhalts enthält, der von der Empfangseinheit während eines den Nutzungsmoment umrahmenden ersten Zeitraums empfangen wurde;
- einen Schritt der Bestimmung (E3) einer Einfügungsqualität des zweiten Inhalts in den ersten Inhalt ausgehend vom empfangenen Einfügungsbericht durch die Überwachungsvorrichtung.

5. Überwachungsverfahren nach Anspruch 4, wobei im Bestimmungsschritt der Einfügungsqualität ein Einfügungsjitter des zweiten Inhalts bestimmt wird, wobei der Jitter einer Zeitverschiebung zwischen dem vorgesehenen Übergangsmoment und einem beobachteten Übergangsmoment entspricht.

6. Überwachungsverfahren nach Anspruch 4, wobei im Bestimmungsschritt der Einfügungsqualität eine Messung der Einfügungs-Erfahrungsqualität des zweiten Inhalts bestimmt wird.

7. Verfahren nach Anspruch 5, wobei die Überwachungsvorrichtung von einer Vielzahl von Empfangseinheiten eine Vielzahl von Einfügungsberichten des zweiten Inhalts in den ersten Inhalt empfängt, die sich auf einen dem Einfügungsbeginn entsprechenden ersten Übergangsmoment zwischen dem ersten Inhalt und dem zweiten Inhalt und auf einen dem Einfügungsende entsprechenden zweiten Übergangsmoment zwischen dem zweiten Inhalt und dem ersten Inhalt beziehen, das Verfahren außerdem einen Schritt der Auswahl einer Empfangseinheit enthält, für die der Einfügungsjitter für den Einfügungsbeginn minimal ist, wobei die Empfangseinheit so eine Bezugs-Empfangseinheit wird;
wobei der Schritt der Bestimmung der Einfügungsqualität den Vergleich, für den zweiten Übergangsmoment, des von der Bezugs-Empfangseinheit kommenden Einfügungsberichts mit den von den anderen Empfangseinheiten der Vielzahl von Empfangseinheiten kommenden Einfügungsberichten enthält.

8. Verfahren nach Anspruch 5, wobei die Überwachungsvorrichtung außer dem von einer ersten Empfangseinheit kommenden Einfügungsbericht eines zweiten Inhalts in den ersten Inhalt von einer zweiten Empfangseinheit einen Einfügungsbericht eines dritten Inhalts, anders als der zweite Inhalt, in den ersten Inhalt empfängt, der sich auf einen dem Einfügungsbeginn entsprechenden ersten Übergangsmoment zwischen dem ersten Inhalt und dem dritten Inhalt und auf einen dem Einfügungsende entsprechenden zweiten Übergangsmoment zwischen dem dritten Inhalt und dem ersten Inhalt bezieht,
wobei der Bestimmungsschritt der Einfügungsqualität eine Korrelation zwischen einer Folge des von der ersten Empfangseinheit während eines das im von der ersten Empfangseinheit empfangenen Einfügungsbericht enthaltenen Einfügungsende umrahmenden Zeitraums empfangenen Inhalts und einer Folge des von der zweiten Empfangseinheit während eines das im von der zweiten Empfangseinheit empfangenen Einfügungsbericht enthaltenen Einfügungsende umrahmenden Zeitraums empfangenen Inhalts enthält.

9. Vorrichtung zum Sammeln (3) von Informationen bezüglich einer Einfügung eines zweiten Inhalts (C2, C3) in einen ersten Inhalt (C1), der in einen Kommunikationsnetz ausgestrahlt wird, wobei die Sammelvorrichtung enthält:
- Einrichtungen (32) zum Erhalt eines vorgesehenen Übergangsmoments zwischen dem ersten und dem zweiten Inhalt;
- Einrichtungen zum Erhalt von Messungen einer Dienstqualität des empfangenen Inhalts, um Dienstqualitäts-Messberichte zu erhalten;
**dadurch gekennzeichnet, dass** die Sammelvorrichtung außerdem enthält:
- Einrichtungen (33) zur Erfassung einer ersten Folge des während eines ersten den Übergangsmoment umrahmenden Zeitraums empfangenen Inhalts;
- Einrichtungen (31) zum Senden eines Einfügungsberichts an eine Überwachungsvorrichtung, wobei die Sendeeinrichtungen eingerichtet sind, um nur wenn die Dienstqualitäts-Messberichte für den ersten Zeitraum anzeigen, dass die Dienstqualität höher ist als eine vorbestimmte Schwelle, mindestens einen Teil der ersten erfassten Folge in den Einfügungsbericht einzuschließen.

10. System (2) zur Überwachung einer Einfügung eines zweiten Inhalts (C2, C3) in einen ersten Inhalt (C1), der an mindestens eine Empfangseinheit (U1-U7) in einem Kommunikationsnetz ausgestrahlt wird, wobei das System mindestens eine Sammelvorrichtung nach Anspruch 9 enthält und eine Überwachungsvorrichtung enthält, die eingerichtet ist, um mit der Sammelvorrichtung zusammenzuwirken, wobei die Überwachungsvorrichtung enthält:
- Einrichtungen zum Senden (21) eines vorgesehenen Übergangsmoments zwischen dem ersten und dem zweiten Inhalt an die Empfangseinheit;
- Einrichtungen zum Empfang (21) eines Einfügungsberichts von der Empfangseinheit, wobei ein Einfügungsbericht nur wenn die Dienstqualitäts-Messberichte anzeigen, dass die Dienstqualität höher ist als eine vorbestimmte Schwelle, mindestens einen Teil einer ersten Folge des Inhalts enthält, der von der Empfangseinheit während eines den Übergangsmoment umrahmenden ersten Zeitraums empfangen wird;
- Einrichtungen zur Bestimmung einer Einfügungsqualität des zweiten Inhalts in den ersten Inhalt ausgehend vom empfangenen Einfügungsbericht.

11. Überwachungssystem nach Anspruch 10, wobei die Überwachungsvorrichtung außerdem Einrichtungen (22) zur Bestimmung eines Einfügungsjitters des zweiten Inhalts ausgehend vom empfangenen Einfügungsbericht enthält, wobei der Jitter einer Zeitverschiebung zwischen dem vorgesehenen Übergangsmoment und einem beobachteten Übergangsmoment entspricht.

12. Computerprogramm, das Anweisungen zur Durchführung des Sammelverfahrens nach Anspruch 1 durch eine Sammelvorrichtung aufweist, wenn dieses Programm von einem Prozessor ausgeführt wird.

## Claims

1. Method for collecting information concerning an insertion of a second content (C2, C3) in a first content (C1) broadcast to at least one receiving entity (U1-U7) in a communication network,
said collection method comprising the following steps implemented by a receiving entity:
- a step of obtaining (F1) a planned time of transition between the first and second contents;
- a step of measuring a quality of service of the received content, in order to obtain quality of service measurement reports;
**characterized in that** the method further comprises:
- a first step of capturing (F3) a first sequence of the content received during a first time interval framing the time of transition;
- a step of sending (F5) to a supervision device (2, S1), at least one insertion report, said insertion report comprising, only when quality of service measurement reports for said first time interval indicate that the quality of service is above a predetermined threshold, at least a part of the first captured sequence.

2. Collection method according to Claim 1, further comprising a second step of capturing (F2, F4) a second sequence of the content received during a second time interval preceding or following said time of transition, the insertion report sent further comprising at least a part of the second captured sequence only when the quality of service measurement reports indicate that the quality of service is above the predetermined threshold.

3. Collection method according to Claim 1, in which the insertion report further comprises the quality of service measurement reports made upon the reception of said first sequence.

4. Method for supervising an insertion of a second content (C2, C3) in a first content (C1) broadcast to at least one receiving entity (U1-U7) in a communication network, said supervision method comprising the following steps:
- a step of sending to the receiving entity by a supervision device of a planned time of transition between the first and second content;
- a step of collection, by a receiving entity, of information concerning an insertion of a second content (C2, C3) in a first content (C1) according to the method of Claim 1;
- a step of reception by the supervision device of an insertion report from the receiving entity comprising, only when the quality of service measurement reports indicate that the quality of service is above a predetermined threshold, at least a part of a first sequence of content received by the receiving entity during a first time interval framing the time of use;
- a step of determination (E3) by the supervision device from the received insertion report of a quality of insertion of the second content in the first content.

5. Supervision method according to Claim 4, in which, during the step of determining the quality of insertion, an insertion jitter of the second content is determined, said jitter corresponding to a time shift between the planned time of transition and an observed time of transition.

6. Supervision method according to Claim 4, in which, during the step of determining the insertion quality, a measurement of quality of experience of insertion of the second content is determined.

7. Method according to Claim 5, in which the supervision device receives a plurality of reports of insertion of the second content in the first content from a plurality of receiving entities, concerning a first time of transition between the first content and the second content, corresponding to the start of insertion, and a second time of transition between the second content and the first content, corresponding to the end of insertion,
said method further comprises a step of selection of a receiving entity for which the insertion jitter for the start of insertion is minimal, said receiving entity thus becoming reference receiving entity;
- the step of determining the quality of insertion comprising the comparison, for the second time of transition, of the insertion report originating from the reference receiving entity with the insertion reports originating from the other receiving entities of the plurality of receiving entities.

8. Method according to Claim 5, in which, in addition to the report of insertion of a second content in the first content originating from a first receiving entity, the supervision device receives a report of insertion of a third content, different from the second content, in the first content originating from a second receiving entity, concerning a first time of transition between the first content and the third content, corresponding to the start of insertion, and a second time of transition between the third content and the first content, corresponding to the end of insertion, the step of determining the insertion quality comprising a correlation between a sequence of the content received by the first receiving entity during a time interval framing the end of insertion included in the insertion report received from said first receiving entity and a sequence of the content received by said second receiving entity during a time interval framing the end of insertion included in the insertion report received from the second receiving entity.

9. Device (3) for collecting information concerning an insertion of a second content (C2, C3) in a first content (C1) broadcast in a communication network, said collection device comprising:
- means (32) for obtaining a planned time of transition between the first and second contents;
- means for obtaining the measurements of a quality of service of the received content, in order to obtain quality of service measurement reports;
**characterized in that** the collection device further comprises:
- means (33) for capturing a first sequence of the content received during a first time interval framing the time of transition;
- means (31) for sending an insertion report to a supervision device, said sending means being arranged to include in the insertion report, only when the quality of service measurement reports for said first time interval indicate that the quality of service is above a predetermined threshold, at least a part of the first captured sequence.

10. System (2) for supervising an insertion of a second content (C2, C3) in a first content (C1) broadcast to at least one receiving entity (U1-U7) in a communication network, said system comprising at least one collection device according to Claim 9 and comprising a supervision device arranged to cooperate with said collection device, said supervision device comprising:
- means (21) for sending to the receiving entity a planned time of transition between the first and second contents;
- means (21) for receiving an insertion report from the receiving entity, an insertion report comprising, only when the quality of service measurement reports indicate that the quality of service is above a predetermined threshold, at least a part of a first sequence of the content received by the receiving entity during a first time interval framing the time of transition;
- means for determining, from the received insertion report, a quality of insertion of the second content in the first content.

11. Supervision system according to Claim 10, in which the supervision device further comprises means (22) for determining, from the received insertion report, an insertion jitter of the second content, said jitter corresponding to a time shift between the planned time of transition and an observed time of transition.

12. Computer program comprising instructions for the implementation of the collection method according to Claim 1 by a collection device, when this program is run by a processor.
